# EUROPÄISCHE PATENTSCHRIFT

(11) **EP 2 723 552 B1**
(45) Veröffentlichungstag und Bekanntmachung des Hinweises auf die Patenterteilung: **13.07.2016**
(21) Anmeldenummer: 13719381.9
(22) Anmeldetag: 10.04.2013
(51) Int. Cl.: B29C 67/00, B22F 3/105

(54) **VERFAHREN UND VORRICHTUNG ZUR HERSTELLUNG VON BAUTEILEN IN EINER STRAHLSCHMELZANLAGE**
METHOD AND DEVICE FOR PRODUCING COMPONENTS IN A BEAM MELTING INSTALLATION
PROCÉDÉ ET DISPOSITIF DE FABRICATION DE PIÈCES DANS UNE INSTALLATION DE FUSION PAR FAISCEAU

(30) Priorität: 20.04.2012 DE 102012007791
(43) Veröffentlichungstag der Anmeldung: 30.04.2014
(73) Patentinhaber: EOS GmbH Electro Optical Systems, 82152 Krailling (DE)
(72) Erfinder: REINARZ, Bernd, 40668 Meerbusch (DE)
(74) Vertreter: Prüfer & Partner mbB Patentanwälte · Rechtsanwälte
(86) Internationale Anmeldenummer: PCT/EP2013/001050
(87) Internationale Veröffentlichungsnummer: WO 2013/156119

(56) Entgegenhaltungen:
- EP-A1- 2 052 693
- EP-A1- 2 319 701
- EP-A2- 1 769 903
- WO-A2-2007/139938
- WO-A2-2012/097799
- JP-A- H0 483 671
- US-A1- 2002 195 747

## Beschreibung

Die Erfindung betrifft ein Verfahren gemäß Anspruch 1 zur Herstellung von Bauteilen in einer Strahlschmelzanlage, bei dem wenigstens ein herzustellendes Bauteil schichtweise hergestellt wird, wobei zur Herstellung jeder Bauteilschicht mittels eines Beschichterschlittens, welcher über eine Bauplattform hinwegfährt, mit einem am Beschichterschlitten befestigten Rakel eine Pulverschicht auf die Bauplattform und bereits erstellte Bauteilschichten aufgetragen wird und nachfolgend mittels eines gelenkten Strahls, insbesondere Laserstrahls oder Elektronenstrahls, Schmelzspuren in die Pulverschicht geschrieben werden, wodurch das Pulver in der Schmelzspur aufschmilzt und sich mit darunter liegenden Bauteilschichten verbindet.

Die Erfindung betrifft weiterhin auch eine Strahlschmelzanlage gemäß Anspruch 9 zur schichtweisen Herstellung wenigstens eines Bauteils umfassend eine Prozesskammer und eine darin angeordnete höhenverstellbare Bauplattform, auf der das wenigstens eine Bauteil herstellbar ist, wobei zur Herstellung jeder Bauteilschicht ein Beschichterschlitten über die Bauplattform hinwegfahrbar ist, um mit einem am Beschichterschlitten befestigten Rakel eine Pulverschicht auf die Bauplattform und bereits erstellte Bauteilschichten aufzutragen und nachfolgend mittels eines gelenkten Strahl, insbesondere Laserstrahls oder Elektronenstrahls, Schmelzspuren in die Pulverschicht zu schreiben, wodurch das Pulver in der Schmelzspur aufschmelzbar ist und mit darunterliegenden Bauteilschichten verbindet.

Strahlschmelzanlagen sind gemäß allgemeiner Definition, beispielsweise nach VDI 3404 solche Anlagen, in denen im Wesentlichen beliebig geformte Bauteile schichtweise hergestellt werden können. Solche Anlagen werden bevorzugt für das sogenannte "rapid prototyping" eingesetzt, dass heißt zur Herstellung funktionsfähiger Prototypen mit Seriencharakter. Im Sinne der Erfindung ist eine Strahlschmelzanlage eine solche Anlage, in der zum schichtweisen Aufbau von wenigstens einem Bauteil Pulver aus einem grundsätzlich als schmelzbar, insbesondere schweißbar geltenden Werkstoff mittels eines Energie tragenden Strahls, insbesondere einer elektromagnetischen Welle (z.B. Laserstrahl) oder eines Teilchenstrahls, insbesondere Elektronenstrahls, in Schmelzspuren aufgeschmolzen wird. Strahlschmelzanlagen im Sinne der Erfindung umfassen somit Anlage mit denen sowohl (und bevorzugt) metallisches Pulver verarbeitet wird, als auch Anlagen, in denen Kunststoff-Pulver verarbeitet wird. Letztere Anlage werden auch als generative Fertigungsanlagen oder Lasersinteranlagen bezeichnet.

Dabei ist es das wesentliche Arbeitsprinzip einer solchen Strahlschmelzanlage, dass wenigstens ein herzustellendes Bauteil auf einer Bauplattform in einer Prozesskammer einer solchen Strahlschmelzanlage schichtweise sukzessive aufgebaut wird, wofür die Bauplattform anfänglich mit einer dünnen Pulverschicht von einem aufzuschmelzenden Pulver in einer Dicke von beispielsweise wenigen Mikrometern, zum Beispiel 20 Mikrometern gleichmäßig beschichtet wird, dadurch dass ein Beschichterschlitten mit einem daran unterseitig angeordneten Rakel das Pulver auf der Bauplattform aufbringt bzw. verteilt.

Mit einem von oben auf diese aufgebrachte Pulverschicht gelenkten Strahl, insbesondere Laserstrahl oder Elektronenstrahl können Schmelzspuren in das Pulver eingeschrieben werden, wodurch am Auftreffort des Strahls auf die Pulverfläche das Pulver aufschmilzt und sich untereinander beziehungsweise sofern schon Schichten des Bauteils darunterliegend erstellt wurden auch mit dieser Schicht verbindet.

Nach der Erstellung solcher Schmelzspuren zur Herstellung einer Bauteilschicht, wird die Bauplattform abgesenkt, um eine neue Pulverschicht mit dem Beschichterschlitten aufzutragen und die nächsten Schmelzspuren zu erzeugen.

So wird sukzessive wenigstens ein herzustellendes Bauteil auf der Bauplattform schichtweise aufgebaut und kann nach einem gegebenenfalls sehr zeitaufwendigen Herstellungsprozess aus der Strahlschmelzanlage als fertig einsetzbares Bauteil entnommen werden.

Bauteile dieser Art können aus verschiedenen Pulverwerkstoffen hergestellt werden, wie beispielsweise aus Metall, aber auch aus Kunststoffen. Entsprechendes Material wird für das Pulver gewählt.

Wesentlich ist für das Verfahren, dass die Herstellung einer Schicht des schichtweise aufzubauenden Bauteils immer in derselben Ebene der Strahlschmelzanlage stattfindet, wofür die Bauplattform mit zunehmendem Schichtaufbau sukzessive in die Tiefe gefahren wird, um die Überfahrt des Beschichterschlittens zu ermöglichen und in der Herstellungsebene einen neuen Pulverauftrag durchzuführen.

Aufgrund der sehr geringen Schichtstärken, die im Bereich weniger Mikrometer, beispielsweise bei 20 Mikrometern liegen, wird eine zuvor hergestellte oberste Bauteilschicht durch das Rakel des Beschichterschlittens in einem sehr geringen Abstand überfahren.

Durch innere Spannungen, z.B. in den obersten Bauteilschichten aber auch darunter befindlichen Bauteilbereichen, aufgrund des thermischen Schmelz-/Schweißverfahrens können Spannungszustände entstehen, bei denen sich Bauteilbereiche plastisch verformen und hierdurch in Richtung zur Herstellungsebene der nächsten folgenden Schicht aufstellen, gegebenenfalls sogar in diese hineinragen. Ein solcher Effekt kann beispielsweise bei Bauteilen entstehen, die Überhangflächen aufweisen, wie beispielsweise schräge Schaufelflächen von Turbinenrädern, etc.

In einer solchen Situation kann es vorkommen, dass im nächsten Beschichtungsvorgang, wenn der Beschichterschlitten mit dem Rakel über die Bauplattform herüberfährt, um eine neue Pulverschicht aufzutragen, das Rakel an einer aufgestellten Stelle der zuvor hergestellten Bauteilschicht anschlägt bzw. kontaktiert.

Hierdurch kann es zu einem Versatz der nachfolgend hergestellten Bauteilschicht gegenüber der vorherigen kommen, sofern der Beschichterschlitten trotz Kontakt weiterfahren kann, im Extremfall kann jedoch auch der Beschichterschlitten mit dem Rakel am Bauteil hängenbleiben, wodurch zum einen der Produktionsprozess nicht fortgeführt werden kann und zum anderen üblicherweise eine Bauteilbeschädigung auftritt, durch welche das Bauteil nicht weiter verwendet werden kann.

Oftmals ist die Situation derart, dass ein solches Aufstellen bestimmter Stellen eines hergestellten Bauteils ein schleichender Prozess ist, was bedeuten kann, dass mit jeder hergestellten Schicht ein weiteres Aufstellen in Richtung der Herstellungsebene erfolgt und hierdurch der Abstand der obersten hergestellten Bauteilschicht zum Rakel des Beschichterschlittens bei der Überfahrt sukzessive weiter abnimmt.

US 2002/0195747 beschreibt ein Verfahren und eine Vorrichtung zum Auftragen eines pastosen Aufbaumaterials in Schichten zum Bilden eines dreidimensionalen Objekts durch selektives Verfestigen der Paste.

EP 2 319 701 A1 beschreibt einen Drucker, bei dem an dem Druckkopf ein Sensor angebracht ist zum Erfassen eines Kontakts des Druckkopfs mit dem festen Druckmedium.

EP 1 769 903 A2 beschreibt eine Stereolithographievorrichtung, bei der an einem Beschichterarm ein Sensor zum Erfassen des Abstands einer Beschichterklinge von einer Oberfläche des flüssigen Harzes angeordnet ist. Vor dem Aufbau eines Objekts wird eine Messfahrt durchgeführt, und während des Aufbau des Objekts wird die Beschichterklinge abhängig von der im Voraus gewonnenen Daten computergesteuert parallel zu der Oberfläche des flüssigen Harzes gehalten.

WO 2012/097799 A2 beschreibt eine Vorrichtung und ein Verfahren zum generativen Herstellen eines Objekts aus einem Pulver, bei dem zumindest ein Abschnitt des verfestigten Bereichs einer Schicht mit Ultraschallsignalen bestrahlt wird und die reflektierten Ultraschallsignale empfangen und ausgewertet werden.

Es ist daher die Aufgabe der Erfindung ein Verfahren sowie Vorrichtungen zur Durchführung des Verfahrens bereitzustellen, mit denen die Möglichkeit geschaffen wird, solche thermischen Verformungen an den Bauteilschichten während der Herstellung frühzeitig festzustellen, beispielsweise um Gegenmaßnahmen zu ergreifen, insbesondere auch um steuernd oder regelnd in den Herstellungsprozess einzugreifen und so weitere Verformungen zu verhindern.

Es ist demnach auch eine weitere Aufgabe der Erfindung, ein Verfahren zur Herstellung von Bauteilen in einer Strahlschmelzanlage derart zu optimieren, dass das Risiko einer Kollision zwischen Rakel und der zuvor hergestellten Bauteilschicht nachhaltig ausgeschlossen werden kann, um somit einen gesamten Herstellungsprozess zu Ende führen zu können.

Bevorzugt ist es auch weiterhin eine Aufgabe der Erfindung, durch das erfindungsgemäße Verfahren Qualitätssicherungsmaßnahmen zu ergreifen, um eventuelle Kollisionen zwischen Rakel des Beschichterschlittens und der obersten Bauteilschicht festzustellen, zu dokumentieren und betroffene Bauteile zu identifizieren.

Erfindungsgemäß wird die Aufgabe durch ein Verfahren der eingangs genannten gattungsgemäßen Art gelöst, das dadurch weitergebildet wird, dass während der Fahrt des Beschichterschlittens zum Auftragen einer neuen Pulverschicht Störungen der Fahrt des Beschichterschlittens oder damit verbundener Bauteile messtechnisch erfasst werden.

Hierbei kann es insbesondere in einer bevorzugten Weiterbildung vorgesehen sein, dass in Abhängigkeit der erfassten Messwerte die Strahlschmelzanlage gesteuert oder sogar geregelt wird, so dass in Abhängigkeit der Messwerte eine Rückkopplung in den Herstellungsprozess von Bauteilen stattfinden kann, um dem eingangs genannten thermischen Verformungseffekten entgegenzuwirken.

Die Aufgabe wird weiterhin auch durch eine Strahlschmelzanlage, insbesondere generative Fertigungsanlage der eingangs genannten Art gelöst, die weiterhin eingerichtet ist, während der Fahrt des Beschichterschlittens zum Auftragen einer neuen Pulverschicht Störungen der Fahrt des Beschichterschlittens oder damit verbundener Bauteile messtechnisch zu erfassen wie zuvor genannt, beispielsweise in Abhängigkeit der erfassten Messwerte, steuernd oder regelnd einzugreifen.

Hierdurch kann dem Umstand Rechnung getragen werden, dass übliche Strahlschmelzanlagen keinerlei Schnittstelle bereitstellen, um in die Steuerung dieser Strahlschmelzanlage von außen einzugreifen, so dass durch die Simulation eines Fehlerereignisses die Möglichkeit geschaffen wird, ein Ereignis zu generieren, das von der Steuerung der Strahlschmelzanlage autark überwacht wird.

Der wesentliche Kerngedanke der Erfindung beruht darauf, dass bei einer Fahrt des Beschichterschlittens über die Bauplattform und eventuell bereits zuvor hergestellte Bauteilschichten zum Zweck des Pulverauftrages dieser Beschichterschlitten mit dem daran angeordneten Rakel normalerweise eine äußerst gleichmäßige, das heißt gleichförmige und nicht weiter beschleunigte Fahrt durchführt, um einen ebenso gleichmäßigen Pulverauftrag einer definierten Schichtstärke zu erzielen.

Durch die eingangs genannten eventuell auftretenden Effekte, dass sich Bauteilbereiche in der obersten und somit zuletzt hergestellten Bauteilschicht oder auch in anderen Bereichen aufgrund thermischer Effekte verformen und in Richtung zum Rakel des Beschichterschlittens aufstellen, kann im Extremfall ein Kontakt zwischen Rakel und Bauteil entstehen, der die Fahrt, das heißt die Gleichmäßigkeit der Fahrt des Beschichterschlittens stört und somit messtechnisch erfasst werden kann.

Störungen dieser gleichmäßigen Fahrt treten jedoch nicht nur auf, wenn im Extremfall das Rakel an der zuletzt hergestellten Bauteilschicht anschlägt, sondern bereits auch dann, wenn sich der Abstand zwischen der zuletzt hergestellten Bauteilschicht und der Rakelunterkante sukzessive verringert, weil hierdurch das aufgetragene Pulver in eine geringere Spaltbreite zwischen Rakelunterkante und der letzten Bauteilschicht verteilt werden muss, was auf das Rakel und somit die Gleichförmigkeit der Bewegung des Schlittens rückwirkt, selbst dann, wenn ein unmittelbarer Kontakt noch nicht gegeben ist.

Der wesentliche Gedanke der Erfindung beruht nun darauf, solche Störungen messtechnisch festzustellen, die Abweichungen von der Gleichförmigkeit der Bewegung des Beschichterschlittens hervorrufen, wobei diese Abweichungen durch die erfassten Messwerte repräsentiert beziehungsweise aus diesen Messwerten ermittelt werden können. Hierfür können z.B. Sensoren und Auswertungen eingesetzt werden, die solche Störungen, insbesondere somit die Abweichung, bzw. die Größe der Abweichungen einer überwachten Größe von einem Normalwert feststellen.

So besteht erfindungsgemäß auch die Möglichkeit, bereits auf geringe Störungen, das heißt Abweichungen von der standardmäßigen Gleichförmigkeit zu reagieren, um so einem Vollkontakt des Rakels und den herzustellenden Bauteilen zu vermeiden, beispielsweise dadurch, dass in Abhängigkeit der festgestellten Störungen beziehungsweise der erfassten Messwerte steuernd oder regelnd in die Strahlschmelzanlage bzw. den Herstellungsprozess eingegriffen wird.

Erfindungsgemäß kann es vorgesehen sein, Störungen der Fahrt des Beschichterschlittens auf verschiedene Arten und Weisen zu erfassen, die grundsätzlich alternativ nebeneinander stehen. Als besonders vorteilhaft hat es sich dabei jedoch erwiesen, Störungen der Fahrt zu erfassen anhand der messtechnischen Erfassung von Schwingungen des Beschichterschlittens oder damit verbundener Bauteile.

So beruht dieser Gedanke im Wesentlichen auf der Überlegung, dass eine ideale Fahrt des Beschichterschlittens, abgesehen vom Start und Stopp des Beschichterschlittens, beschleunigungsfrei ist und somit (ideal betrachtet) keinerlei Schwingung im Beschichterschlitten oder daran angeordneter Bauteile vorhanden ist. Schwingungen entstehen jedoch durch den Auftragvorgang des Pulvers beziehungsweise nicht vermeidbare Schwingungen vergrößern sich durch diesen Vorgang, insbesondere dann, wenn der Abstand zwischen der zuletzt hergestellten Bauteilschicht und dem Rakel sich verringert. So erzeugt der Auftragsvorgang quasi eine Art "Kratzen" des Rakel auf der Bauteiloberfläche durch das Pulver, da darauf gerieben wird.

Erfindungsgemäß kann es dabei vorgesehen sein, die Schwingungen zu erfassen anhand von Beschleunigungen, die am Beschichterschlitten oder an einem damit verbundenen Bauteil, also beispielsweise am Rakel, auftreten. Ebenso besteht auch die Möglichkeit, von den erzeugten Schwingungen Amplitude und/oder Frequenz mit dafür entsprechend geeigneten Sensoren zu erfassen. Beispielsweise können zur Erfassung der eingangs genannten Beschleunigung Piezo-Sensoren eingesetzt werden, für die Amplitude und/oder Frequenz von Schwingungen können beispielsweise auch Körperschall-Sensoren zum Einsatz kommen.

In einer anderen Ausgestaltung der Erfindung kann es auch vorgesehen sein, die messtechnische Erfassung von Kräften vorzunehmen, insbesondere von solchen Kräften, die gegen die Fahrrichtung des Beschichterschlittens wirken, den Beschichterschlitten somit im Wesentlichen bremsen, wenn das Pulver am Ort der zuletzt hergestellten Bauteilschicht in einen sich zunehmend verkleinernden Spalt zwischen Rakel und Bauteilschicht verteilt wird. Auch hierfür können beispielsweise geeigneten Kraftsensoren, beispielsweise auf Piezo-Basis an einem Beschichterschlitten oder an einem damit verbundenen Bauteil angeordnet werden.

In einer anderen Alternative kann es auch vorgesehen sein, die messtechnische Erfassung der Antriebsleistung oder der antreibenden Ströme und/oder Spannungen desjenigen Motors vorzunehmen, mit dem der Beschichterschlitten bewegt wird. So werden sich insbesondere bei einem Kontakt zwischen Rakel und Bauteil die Antriebsströme deutlich erhöhen, so dass eine solche Erhöhung messtechnisch ausgewertet werden kann, um entsprechende Aktionen auszulösen, beispielsweise einen Nothalt.

In einer wiederum anderen Alternative kann es auch vorgesehen sein, Auslenkungen des Beschichterschlittens oder damit verbundener Bauteile aus einer Normallage heraus messtechnisch zu erfassen. Z.B. kann hierfür wenigstens ein Dehnungsmessstreifen als Sensor eingesetzt werden, z.B. am Rakel oder am Beschichterschlitten. Solche Dehnungsmessstreifen ändern bei Streckung oder Stauchung ihren Widerstand, so dass hierdurch eine Auslenkung erfassbar ist, z.B. durch direkte Widerstandsmessung oder auch Strom oder Spannungsmessung, je nach Verschaltung des Sensors.

Eine andere Ausführung kann auch vorsehen akustischen Schall mittels eines Mikrofons als Sensor messtechnisch zu erfassen, insbesondere innerhalb der Herstellungskammer, da die Überfahrt des Beschichterschlittens über ein Bauteil besonders bei einer Kontaktierung Geräusche erzeugt, die erfasst werden können. Hier kann das Mikrofon einerseits ortsfest in der Kammer angeordnet sein, andererseits aber auch mit dem Beschichterschlitten mitbewegt sein, bevorzugt an einer Unterseite des Beschichterschlittens angeordnet sein, um dort entstehenden Schall unmittelbar empfangen zu können.

Besonders bei der zuvor genannten bevorzugten Erfassung von Schwingungen, zum Beispiel durch Beschleunigungsmessung oder Messung von Amplitude und/oder Frequenz mittels eines geeigneten Sensors, kann es vorgesehen sein, diesen Sensor am oder nahe dem freien Ende eines Beschichterschlittens anzuordnen, das heißt, demjenigen Ende des Beschichterschlittens, welches einer Führung gegenüberliegt, in welcher der Beschichterschlitten während der Fahrt über die Bauplattform geführt ist. Diese Ausführung ist bevorzugt bei solchen Anlagen eingesetzt, bei denen der Beschichterschlitten nur einseitig geführt ist. An diesem freien Ende werden eventuell erzeugte Schwingungen besonders signifikant und mit dort angeordneten Sensoren gut feststellbar sein.

Erfindungsgemäß kann es vorgesehen sein, die Störungen beziehungsweise die Messwerte, beispielsweise von vorgenannten geeigneten Sensoren nur innerhalb eines Teilbereichs der gesamten Fahrstrecke des Beschichterschlittens zu erfassen, bevorzugt nämlich innerhalb desjenigen Teilbereichs, in welchem die herzustellenden Bauteile auf einer Bauplattform angeordnet sind.

Es können also gerade die anfänglichen Beschleunigungsbereiche sowie die am Ende befindlichen Bremsbereiche bei der messtechnischen Erfassung von Messwerten ausgelassen werden, ebenso wie solche Bereiche, in denen keinerlei Bauteil auf einer Bauplattform angeordnet sind, da in solchen Bereichen eventuell aufgenommene Messwerte keine für das Verfahren erforderliche Relevanz haben und hierdurch somit beispielsweise die Datenmenge reduziert werden kann.

Der Teilbereich, in dem die Erfassung von Messwerten vorgenommen werden soll, kann zum Beispiel rechentechnisch festgelegt werden, zum Beispiel aus der Steuerung einer Strahlschmelzanlage heraus, da dieser Steuerung bekannt ist, in welchen Bereichen die Bauteile innerhalb einer Bauplattform angeordnet sind. Beispielsweise bei Antrieb eines Beschichterschlittens mit Schrittmotoren können Schrittbereiche definiert sein, in denen die Messwerterfassung stattfinden soll beziehungsweise nicht erfolgen soll.

Sofern ein Zugriff auf die Steuerung von Strahlschmelzanlagen nicht möglich ist, kann es vorgesehen sein, die Messwerterfassung zuzulassen beziehungsweise zu unterbrechen mittels einer zusätzlichen Sensorik, zum Beispiel innerhalb einer Kammer zur Herstellung von Bauteilen, die bei einer Strahlschmelzanlage angeordnet werden kann und die Bewegung des Beschichterschlittens sensorisch beobachtet.

Beispielsweise kann hierfür am Beschichterschlitten selbst ein Näherungssensor angeordnet werden, der an einem Näherungsobjekt mit der Bewegung des Beschichterschlittens entlanggefahren wird, wobei das Näherungsobjekt durch seine Längserstreckung längs des Fahrweges den Bereich definiert, in dem Messwerte erfasst werden sollen.

So wird das Näherungsobjekt beispielsweise eine Längserstreckung aufweisen, die kleiner oder maximal gleich der Länge der Bauplattform in Bewegungsrichtung des Beschichterschlittens ist.

In einem solchen Fall wird der Beschichterschlitten mit den Näherungssensor beim Anfahren des Schlittens keinerlei Messwerte aufnehmen, da in diesem Fall der Näherungssensor noch nicht die Nähe zum vorgenannten Näherungsobjekt erreicht hat. Erst wenn dies der Fall ist und der Näherungssensor die Nähe feststellt, kann hierdurch die Messwerterfassung ausgelöst werden, bis dass der Näherungssensor vollständig an dem Näherungsobjekt entlang und vorbeigefahren ist, wonach die Messwerterfassung unterbrochen wird.

Beispielsweise kann ein Näherungsobjekt magnetisch ausgebildet sein, um durch die magnetische Feldwirkung gegenüber dem Näherungssensor die Messwerterfassung auszulösen beziehungsweise zu beenden, z.B. durch Reed-Kontakt oder auch durch mechanisch schaltende Kontakte.

Alternativ zu der vorgenannten Lösung können auch andere Möglichkeiten eingesetzt werden, um Teilbereiche für die Erfassung von Messwerten längs des Fahrweges des Beschichterschlittens zu definieren.

Unabhängig davon, welche Art von Messwerten beziehungsweise welche Art von Sensor eingesetzt wird um Störungen bei der Fahrt des Beschichterschlittens zu erfassen, ist es in einer besonders bevorzugten Weiterbildung der Erfindung vorgesehen, die erfassten Messwerte auf das Überschreiten wenigstens eines gespeicherten Grenzwertes zu überprüfen, bevorzugt sogar auf das Überschreiten mehrerer gespeicherter Grenzwerte insbesondere sukzessive ansteigender Grenzwerte zu überprüfen und so dann bei mehreren solchen gegebenen Grenzwerten verschiedene grenzwertabhängige Aktionen auszulösen. Bei Überschreiten mehrerer Grenzwerte innerhalb einer Beschichtungsfahrt kann es vorgesehen sein alle Aktionen auszulösen, die den einzelnen Grenzwertüberschreitungen zugordnet sind oder alternativ auch nur die Aktion auszulösen, die dem größten überschrittenen Grenzwert zugeordnet ist.

So kann es beispielsweise vorgesehen sein, dass bei Überschreiten eines bestimmten Grenzwertes, zum Beispiel eines bestimmten Beschleunigungswertes, der am Beschichterschlitten oder an einem daran angeordneten Bauteil gemessen wird, eine Aktion auszulösen, die beispielsweise rein informativen Charakter hat, jedoch keine unmittelbare Auswirkung auf die Steuerung oder eine Regelung der Strahlschmelzanlage hat. In einer beispielhaften Anwendung kann es vorgesehen sein, bei der Überschreitung eines solchen, beispielsweise ersten von mehreren Grenzwerten lediglich eine Signalisierung vorzunehmen z.B. optisch, akustisch oder eine Telekommunikation an einen Betreiber der Anlage vorzunehmen, zum Beispiel durch Versenden einer SMS, einer E-Mail oder ähnlicher Nachrichten an ein Telekommunikationsgerät des Betreibers, um diesen von einer sich eventuell anbahnenden Störung zu unterrichten.

Weiterhin kann es vorgesehen sein, bei Überschreitung eines gespeicherten Grenzwertes, zum Beispiel eines solchen, der größer ist als der vorgenannte Grenzwert, in die Steuerung der Strahlschmelzanlage einzugreifen. Ein solches Eingreifen kann zum Beispiel darin bestehen, Herstellungsparameter zu ändern.

Beispielsweise kann es vorgesehen sein, bei einem solchen Überschreiten des genannten Grenzwertes eine Doppelbelichtung derselben Pulverschicht durchzuführen, d.h. die programmierten Schmelzspuren, beispielsweise nochmals mit dem Laser abzufahren. Eine andere Aktion kann auch vorsehen, die Laserenergie zu ändern, beispielsweise zu erhöhen oder gegebenenfalls auch zu verringern oder die Geschwindigkeit zu ändern, beispielsweise zu reduzieren, mit welcher die Schmelzspur des Laserstrahls geschrieben wird.

Eine weitere Aktion, insbesondere bei Überschreiten eines Grenzwertes, der wiederum höher ist, als der zuvor genannte, kann es vorsehen, bei der Beschichtung mit Pulver eine höhere Schichtstärke zu verwenden beziehungsweise mehrfach zu beschichten, so dass hierdurch höhere Schichtstärken realisiert werden, wonach sodann mit einer so erhöhten Schichtstärke die Schmelzspuren geschrieben werden. Ebenso besteht auch hier die Möglichkeit, nach Überschreiten eines solchen Grenzwertes wiederum auch andere Prozessparameter, insbesondere Belichtungsparameter beim Schreiben der Schmelzspuren zu ändern.

Eine andere Aktion kann auch vorsehen, insbesondere bei Überschreiten eines gespeicherten Grenzwertes, beispielsweise eines solchen, der größer ist als die zuvor genannten Grenzwerte, einen Nothalt der Anlage auszuführen, beispielsweise wenn sich durch die Beobachtung der Messwerte und der überschrittenen Grenzwerte abzeichnet, dass eine Kollision des Rakels mit einer hergestellten Bauteilschicht entweder unmittelbar bevorsteht oder aktuell stattgefunden hat.

So kann es erfindungsgemäß beispielsweise vorgesehen sein, eine Gruppe von Messwerten zu definieren, die hinsichtlich Größe, dass heißt der absoluten Werte geordnet sind, um mit steigender Größe der Grenzwerte unterschiedliche, insbesondere sich unterschiedlich stark auswirkende Eingriffe in die Steuerung oder Regelung der Anlage vorzunehmen.

In einer Weiterbildung, die insbesondere mit der vorherigen Ausführung auch kombinierbar ist, kann es vorgesehen sein, in Abhängigkeit der erfassten Messwerte, wie beispielsweise Beschleunigungswerte, und hier insbesondere beim Überschreiten eines wiederum gespeicherten, vorbestimmten Grenzwertes eine aktuelle Herstellungssituation fotografisch oder videografisch zu erfassen, wofür beispielsweise innerhalb der Herstellungskammer einer solchen Strahlschmelzanlage eine entsprechende Kamera vorgesehen sein kann.

So besteht die Möglichkeit festzustellen, welches Bauteil auf der Bauplattform von der festgestellten Situation der Grenzwertüberschreitung betroffen ist, da das hergestellte Foto beziehungsweise Video zeitlich sodann mit der Überschreitung des Grenzwertes korreliert.

Es kann auch vorgesehen sein, in Abhängigkeit der erfassten Messwerte, somit beispielsweise bei Überschreiten eines wiederum vorbestimmten gespeicherten Grenzwertes das aktuell unter dem Beschichterschlitten angeordnete herzustellende Bauteil aus einer Gruppe von mehreren auf einer Bauplattform angeordneten Bauteilen aus dem weiteren Herstellungsprozess auszublenden.

Hierbei kann das Bauteil beispielsweise in Verbindung mit der zuvor genannten Ausführungsform fotografisch oder videografisch identifiziert werden oder es besteht alternativ auch die Möglichkeit, die aktuelle Position des Beschichterschlittens entlang seines Fahrweges auszuwerten oder beispielsweise zusätzlich zu erfassen, insbesondere um so das Bauteil oder diejenigen Bauteile, die innerhalb eines Positionsintervalles angeordnet sind, welches die festgestellte Position umfasst, aus der weiteren Herstellung auszuschließen.

So kann sichergestellt werden, dass keine fehlerhaften Bauteile hergestellt werden, dass jedoch der weitere Herstellschritt von eventuell anderen Bauteilen einer Gruppe von mehreren Bauteilen fortgesetzt werden kann. Hierbei ist auch weiterhin als vorteilhaft zu werten, dass für das zuvor festgestellte, wenigstens eine Bauteil, welches aus der weiteren Herstellung ausgeblendet wird, keine weitere Herstellungszeit aufgewandt wird, so dass die übrigen Bauteile dann in kürzerer Zeit fertiggestellt werden können.

In einer Weiterbildung kann es ebenso vorgesehen sein, dass in Abhängigkeit der erfassten Messwerte, insbesondere wiederum beim Überschreiten eines vorbestimmten, zum Beispiel gespeicherten Grenzwertes, und insbesondere bei dem größten aller Grenzwerte ein Nothalt der Strahlschmelzanlage erzeugt wird. Besonders bevorzugt kann es vorgesehen sein, einen solchen Nothalt zu erzeugen, noch bevor ein tatsächlicher Kontakt zwischen Rakel und Bauteil stattgefunden hat.

Wie eingangs erwähnt, ist es auch ein wesentlicher Vorteil des erfindungsgemäßen Verfahrens, dass dieses bei bestehenden Strahlschmelzanlagen nachgerüstet werden kann, selbst wenn diese keine Schnittstelle zum Eingriff in die Steuerung der Strahlschmelzanlage zulassen. Beispielsweise kann zumindest die Funktion des Nothaltes realisiert werden, gegebenenfalls auch andere Aktionen, insbesondere solche Aktionen, die von der Steuerung der Strahlschmelzanlage selbsttätig überwacht werden.

So ist es beispielsweise regelmäßig der Fall, dass in Strahlschmelzanlagen der eingangs genannten gattungsgemäßen sowie auch erfindungsgemäßen Art der Pulvervorrat zur Herstellung der einzelnen Schichten überwacht wird, um die Anlage anzuhalten, wenn der Pulvervorrat zu Neige geht beziehungsweise kein Pulver mehr zur Verfügung steht.

Es besteht somit die Möglichkeit, bei einer Vorrichtung zur Nachrüstung von Strahlschmelzanlagen vorzusehen, dass mit dieser ein Fehlerereignis erzeugbar ist, was von der Steuerung überwacht wird, beispielsweise also das Fehlerereignis zu erzeugen, dass kein Pulver mehr vorhanden ist, obwohl dies faktisch nicht korrekt ist. Es kann also beispielsweise vorgesehen sein, einen Aktor oder Signalgenerator zu verwenden, der einen Sensor zur Überwachung eines bestimmten Fehlerereignisses, wie beispielsweise des Pulvervorrates trotz tatsächlichem Nichtvorliegen des konkreten Fehlerereignisses zu betätigen und durch diese Betätigung das Fehlerereignis zu simulieren und künstlich auszulösen.

So glaubt die Anlagen in einem solchen Fall, das überwachte Fehlerereignis festgestellt zu haben und löst den Nothalt aus, so dass Wartungspersonal in den Herstellungsprozess eingreifen kann, beispielsweise um den Fehler manuell zu beheben oder den Herstellungsprozess abzubrechen.

Kabel- oder auch funkgebunden können die Messwerte aus der Herstellungskammer einer Strahlschmelzanlage zu einer Datenverarbeitungsanlage übertragen und dort ausgewertet werden, beispielsweise hinsichtlich des Überschreitens eines oder mehrerer verschiedener Grenzwerte, um sodann Aktionen auszulösen, beispielsweise die zuvor genannte Nothalt-Funktion durch Simulation eines Fehlerereignisses.

Ein Ausführungsbeispiel der Erfindung wird nachfolgend näher beschrieben. Es zeigen:
Figur 1 die Ansicht auf einen Beschichterschlitten oberhalb einer Bauplattform innerhalb einer Strahlschmelzanlage,
Figur 2 eine beispielhafte Darstellung von erfassten Messwerten.

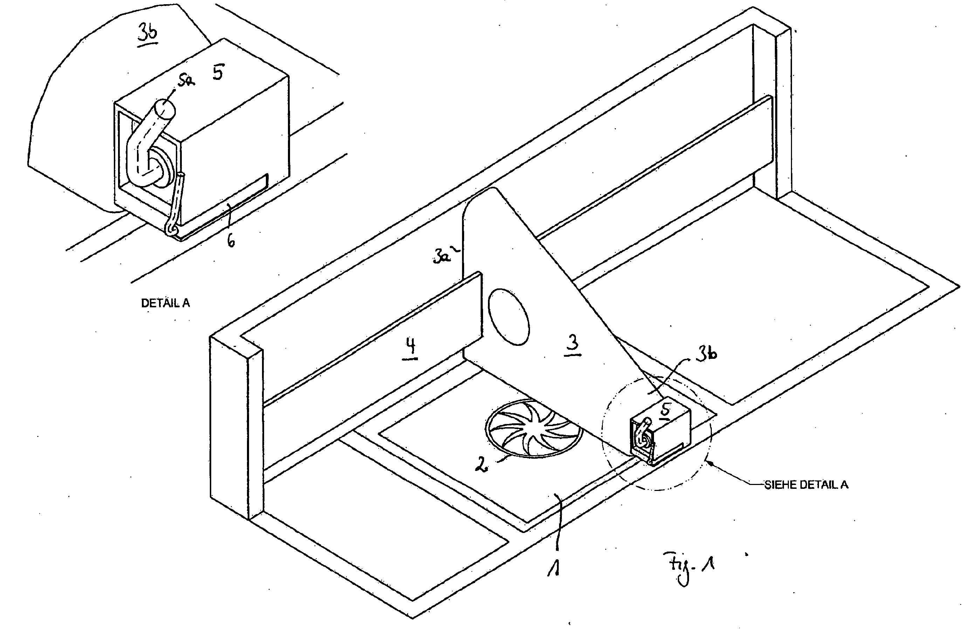

Die Figur 1 zeigt im Wesentlichen eine vereinfachte Innenansicht einer Strahlschmelzanlage beziehungsweise einer darin vorgesehenen Kammer zu Herstellung von wenigstens einem schichtweise aufzubauenden Bauteil. Dargestellt ist in Figur 1 im Wesentliche eine Bauplattform 1, auf der hier vereinfacht ein einzelnes Bauteil 2 schichtweise hergestellt werden soll.

Zu diesem Zweck überfährt der Beschichterschlitten 3 mit einer Pulverauftragsvorrichtung und einem unter dem Schlitten 3 hier nicht sichtbar angeordneten Rakel die Bauplattform 1, um eine dünne Pulverschicht von beispielsweise wenigen Mikrometern auf die Bauplattform aufzubringen. Durch einen hier nicht weiter dargestellten Laserstrahl wird eine Schmelzspur in die Pulveroberfläche geschrieben, die dem Bauteilquerschnitt des herzustellenden Bauteils in der aktuellen Bearbeitungsschicht entspricht. Das Bauteil 2 in der Figur 1 entspricht hier im Wesentlichen einem Schaufelrad, das schichtweise hergestellt werden soll.

Der Beschichterschlitten 3 weist ein festes Ende 3a auf, dass an einer Führung 4 geführt ist, umso den Beschichterschlitten längs des Pulverauftragweges über die Bauplattform 1 zu führen. Das gegenüberliegende Ende 3b hingegen ist im vorliegenden Fall frei, somit also mechanisch nicht abgestützt, kann aber bei anderen Ausführungsformen von Strahlschmelzanlagen jedoch auch geführt sein.

Die hier gezeigte erfindungsgemäße Anlage weist der auch weiterhin herausgestellten Detailansicht am freien Ende 3b des Beschichterschlittens 3 einen zum Beispiel Piezo-basierten Beschleunigungssensor 5 der Beschleunigungswerte des freien Endes des Beschichterschlittens während der Beschichtungsfahrt, das heißt während des Pulverauftrages bei der Fahrt über die Bauplattform 1 erfasst. Kabelgebunden können beispielsweise durch das hier ansatzweise dargestellte Kabel 5a des Sensors die erfassten Messwerte zu einer nicht gezeigten Datenverarbeitungsanlage übertragen werden.

Figur 1 zeigt hier eine bevorzugte Weiterbildung der hier dargestellten Erfindung, bei welcher an dem freien Ende 3b des Beschichterschlittens noch ein weiterer Sensor 6, hier ein Näherungssensor 6, angeordnet ist, der beispielsweise im gleichen Gehäuse positioniert ist, welches auf den Beschleunigungssensor 5 aufnimmt. Mittels eines hier nicht weiter gezeigten Näherungsobjektes kann bei einer Vorbeifahrt des Näherungssensors 6 an dem nicht gezeigten Näherungsobjekt festgestellt werden, ob sich der Sensor 5 zur Aufnahme von Beschleunigungsmesswerten in einem Bereich befindet, in welchem auf der Bauplattform ein Bauteil angeordnet ist oder in einem Bereich ohne Bauteil befindet. So kann die Messwerterfassung beispielsweise anhand des Signales des Näherungssensors 6 getriggert werden und so die erfasste Datenmenge reduziert werden. Die Messwerte werden über diese Ausführung sodann nur an einem Teilbereich des gesamten Verfahrweges des Schlittens 3 aufgenommen und durch die Datenverarbeitungsanlage erfasst.

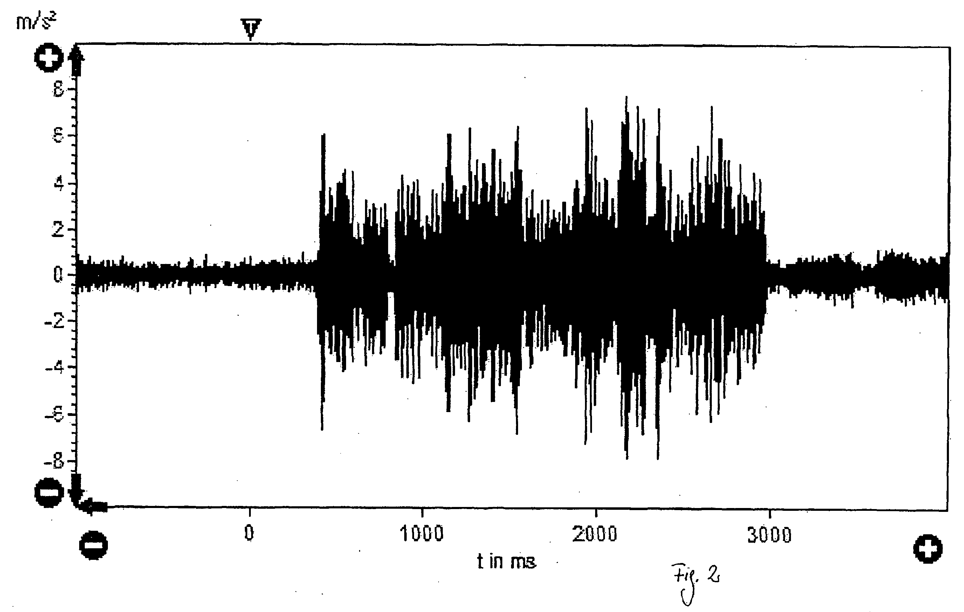

Die Figur 2 zeigt zeitlich aufgetragen die erfassten Messwerte, im vorliegenden Fall Beschleunigungsmesswerte, die mit einem Sensor 5 gemäß Figur 1 aufgenommen sein können. Ersichtlich zeigt sich bei der Darstellung der Figur 2, dass in den linken und rechten seitlichen Randbereichen dieses zeitlich aufgetragenen Diagramms lediglich sehr geringe Beschleunigungswerte von etwa 2 m/s² erfasst werden, die beispielsweise darauf hindeuten, dass keinerlei Störung bei der Fahrt des Beschichterschlittens vorliegt. Dies können beispielsweise Bereiche sein, in denen auf der Bauplattform keinerlei Bauteile vorhanden sind, insbesondere somit also die anfänglichen Bereiche sowie auch die Endbereiche der Bauplattform bei einem zum Beispiel mittig darauf angeordneten Bauteil, wie es die Figur 1 exemplarisch zeigt.

Überfährt hingegen der Beschichterschlitten 3 mit dem Rakel zum Zweck des Pulverauftrages das bereits schichtweise und teilweise hergestellte Bauteil, so werden größere Schwingungen am freien Ende des Beschichtungsschlittens 3 erzeugt, die in der Figur 2 durch Messwerte bis in den Bereich von 8 m/s² dargestellt sind.

Es zeigt sich, dass anhand eines solchen Diagramms Grenzwerte definiert werden können, die hinsichtlich des Überschreitens durch die aufgenommenen Messwerte von der Datenverarbeitungsanlage überprüft werden können. In Abhängigkeit davon, ob eine solche Überschreitung eines oder auch mehrerer, insbesondere in der Größe gestaffelter Grenzwerte, stattfindet, können demnach von der erfindungsgemäßen Vorrichtung unterschiedliche Aktionen, zum Beispiel Steuerungen oder auch Eingriffe in die Regelungen der Strahlschmelzanlage vorgenommen werden, wie es im allgemeinen Teil beschrieben wurde.

Statt eines Beschleunigungssensors besteht ebenso die Möglichkeit andere Arten von Sensoren, ebenso auf dem freien Ende des Beschichterschlittens 3 anzuordnen, zum Beispiel Sensoren, welchen die Schwingungsamplitude oder auch die Schwingungsfrequenz erfassen. So besteht auch die Möglichkeit, zum Beispiel nach einer Fourier-Transformation der zeitlich erfassten Messwerte anhand der auftretenden Schwingungsfrequenzen und Amplituden beziehungsweise in Abhängigkeit hiervon Aktion und somit Eingriffe in die Steuerung oder Regelung der Strahlschmelzanlage vorzunehmen.

## Patentansprüche

1. Verfahren zur Herstellung von Bauteilen (2) in einer Strahlschmelzanlage, bei dem wenigstens ein herzustellendes Bauteil (2) schichtweise hergestellt wird,
wobei zur Herstellung jeder Bauteilschicht mittels eines Beschichterschlittens (3), welcher über eine Bauplattform (1) hinwegfährt, mit einem am Beschichterschlitten (3) befestigten Rakel eine Pulverschicht auf die Bauplattform (1) und bereits erstellte Bauteilschichten aufgetragen wird und
nachfolgend mittels eines gelenkten Strahls, insbesondere Laserstrahls oder Elektronenstrahls, Schmelzspuren in die Pulverschicht geschrieben werden, wodurch das Pulver in der Schmelzspur aufschmilzt und sich mit darunter liegenden Bauteilschichten verbindet,
**dadurch gekennzeichnet, dass**
während der Fahrt des Beschichterschlittens (3) zum Auftragen einer neuen Pulverschicht Störungen der Fahrt des Beschichterschlittens (3) oder damit verbundener Bauteile messtechnisch erfasst werden.

2. Verfahren nach Anspruch 1, **dadurch gekennzeichnet, dass** in Abhängigkeit der erfassten Meßwerte die Strahlschmelzanlage gesteuert und/oder geregelt wird.

3. Verfahren nach Anspruch 1 oder 2, **dadurch gekennzeichnet, dass** die Störungen der Fahrt erfasst werden durch wenigstens eine der folgenden Alternativen:
a. die messtechnische Erfassung von Schwingungen des Beschichterschlittens (3) oder damit verbundener Bauteile, insbesondere durch Messung von Beschleunigungen und/oder der Amplitude und/oder Frequenz, insbesondere mittels eines Sensors (5) am Beschichterschlitten (3) oder einem damit verbundenen Bauteil,
b. die messtechnische Erfassung von Kräften, insbesondere von gegen die Fahrrichtung wirkenden Kräften am Beschichterschlitten (3) oder einem damit verbundenen Bauteil, insbesondere mittels eines Sensors am Beschichterschlitten (3) oder einem damit verbundenen Bauteil,
c. die messtechnische Erfassung der Antriebsleistung oder der antreibenden Ströme des Motors, mit dem der Beschichterschlitten (3) bewegt wird,
d. die messtechnische Erfassung von akustischem Schall mittels eines Mikrofons als Sensor, insbesondere innerhalb der Herstellungskammer,
e. die messtechnische Erfassung von Auslenkungen des Beschichterschlittens (3) oder damit verbundener Bauteile, insbesondere mittels wenigstens eines Dehnungsmessstreifens als Sensor

4. Verfahren nach einem der vorherigen Ansprüche, **dadurch gekennzeichnet, dass** die Störungen bzw. die Meßwerte nur innerhalb eines Teilbereichs der gesamten Fahrstrecke des Beschichterschlittens (3) erfasst werden, wobei innerhalb des Teilbereichs alle herzustellenden Bauteile (2) angeordnet sind.

5. Verfahren nach einem der vorherigen Ansprüche, **dadurch gekennzeichnet, dass** die erfassten Messwerte auf das Überschreiten wenigstens eines gespeicherten Grenzwertes überprüft werden, insbesondere wobei bei mehreren vorgegebenen Grenzwerten verschiedene grenzwertabhängige Aktionen ausgelöst werden.

6. Verfahren nach einem der vorherigen Ansprüche, **dadurch gekennzeichnet, dass** in Abhängigkeit der erfassten Messwerte, insbesondere bei Überschreiten eines vorbestimmten Grenzwertes die aktuelle Herstellungssituation fotografisch oder videografisch erfasst wird.

7. Verfahren nach einem der vorherigen Ansprüche, **dadurch gekennzeichnet, dass** in Abhängigkeit der erfassten Messwerte, insbesondere bei Überschreiten eines vorbestimmten Grenzwertes das aktuell unter dem Beschichterschlitten (3) angeordnete herzustellende Bauteil (2) aus einer Gruppe von mehreren auf der Bauplattform angeordneten Bauteilen (2) aus dem weiteren Herstellungsprozess ausgeblendet wird.

8. Verfahren nach einem der vorherigen Ansprüche, **dadurch gekennzeichnet, dass** in Abhängigkeit der erfassten Messwerte, insbesondere bei Überschreiten eines vorbestimmten Grenzwertes ein Nothalt der Strahlschmelzanlage erzeugt wird.

9. Strahlschmelzanlage zur schichtweisen Herstellung wenigstens eines Bauteils mit
einer Prozesskammer,
einer darin angeordneten höhenverstellbaren Bauplattform (1), auf der das wenigstens eine Bauteil (2) herstellbar ist,
wobei zur Herstellung jeder Bauteilschicht ein Beschichterschlittens (3) über die Bauplattform (1) hinwegfahrbar ist, um mit einem am Beschichterschlitten (3) befestigten Rakel eine Pulverschicht auf die Bauplattform und bereits erstellte Bauteilschichten aufzutragen und nachfolgend mittels eines gelenkten Strahls, insbesondere Laserstrahls oder Elektronenstrahls, Schmelzspuren in die Pulverschicht zu schreiben, wodurch das Pulver in der Schmelzspur aufschmelzbar ist und sich mit darunter liegenden Bauteilschichten verbindet,
**dadurch gekennzeichnet, dass**
die Anlage eingerichtet ist, während der Fahrt des Beschichterschlittens (3) zum Auftragen einer neuen Pulverschicht Störungen der Fahrt des Beschichterschlittens (3) oder damit verbundener Bauteile messtechnisch zu erfassen.

10. Strahlschmelzanlage nach Anspruch 9, **dadurch gekennzeichnet, dass** in Abhängigkeit der erfassten Meßwerte die Strahlschmelzanlage steuerbar und/oder regelbar ist.

11. Strahlschmelzanlage.nach Anspruch 9 oder 10, **dadurch gekennzeichnet, dass** sie wenigstens einen Sensor (5) am Beschichterschlitten (3) oder an einem damit verbundenen Bauteil aufweist, mit dem während der Fahrt entstehende Schwingungen und/oder Auslenkungen des Beschichterschlittens oder des damit verbundenen Bauteils messtechnisch erfassbar sind.

## Claims

1. Method for producing components (2) in a beam melting installation, in which at least one component (2) to be produced is produced layer-wise,
wherein, in order to produce each component layer, a powder layer is applied onto the build platform (1) and already produced component layers by means of a coating slide (3), which moves across a build platform (1), by a blade fastened on the coating slide (3), and
melt traces are subsequently inscribed in the powder layer by means of a directed beam, in particular a laser beam or electron beam, so that the powder melts in the melt trace and bonds to underlying component layers,
**characterized in that**
during the travel of the coating slide (3) in order to apply a new powder layer, perturbations of the travel of the coating slide (3) or components connected thereto are metrologically detected.

2. Method according to Claim 1, **characterized in that** the beam melting installation is controlled and/or regulated as a function of the detected measurement values.

3. Method according to Claim 1 or 2, **characterized in that** the perturbations of the travel are detected by at least one of the following alternatives:
a. metrological detection of perturbations of the coating slide (3) or components connected thereto, in particular by the measurement of accelerations and/or of the amplitude and/or frequency, in particular by means of a sensor (5) on the coating slide (3) or a component connected thereto,
b. metrological detection of forces, in particular forces acting against the travel direction on the coating slide (3) or a component connected thereto, in particular by means of a sensor on the coating slide (3) or a component connected thereto,
c. metrological detection of the drive power or the driving currents of the motor, by which the coating slide (3) is moved,
d. metrological detection of acoustic sound by means of a microphone as a sensor, particularly inside the production chamber,
e. metrological detection of deflections of the coating slide (3) or components connected thereto, in particular by means of at least one strain gauge as a sensor.

4. Method according to one of the preceding claims,
**characterized in that** the perturbations or the measurement values are only detected within a subregion of the overall travel distance of the coating slide (3), all components (2) to be produced being arranged inside the subregion.

5. Method according to one of the preceding claims,
**characterized in that** the detected measurement values are checked for the exceeding of at least one stored limit value, in particular with different limit-value-dependent actions being initiated for a plurality of predetermined limit values.

6. Method according to one of the preceding claims,
**characterized in that** the current production situation is photographically or videographically detected as a function of the detected measurement values, in particular when a predetermined limit value is exceeded.

7. Method according to one of the preceding claims,
**characterized in that** the component (2) to be produced currently arranged under the coating slide (3) is excluded from the further production process as a function of the detected measurement values, in particular when a predetermined limit value is exceeded.

8. Method according to one of the preceding claims,
**characterized in that** an emergency stop of the beam melting installation is generated as a function of the detected measurement values, in particular when a predetermined limit value is exceeded.

9. Beam melting installation for layer-wise production of at least one component, having
a process chamber,
a build platform (1), arranged height-adjustably therein, on which the at least one component (2) can be produced,
a coating slide (3) being movable across the build platform (1) in order to produce each component layer, in order to apply a powder layer onto the build platform and already produced component layers by a blade fastened on the coating slide (3), and subsequently to inscribe melt traces in the powder layer by means of a directed beam, in particular a laser beam or electron beam, so that the powder can be melted in the melt trace and bonds to underlying component layers,
**characterized in that**
the installation is configured to metrologically detect perturbations of the travel of the coating slide (3) or components connected thereto during the travel of the coating slide (3) in order to apply a new powder layer.

10. Beam melting installation according to Claim 9,
**characterized in that** the beam melting installation is controllable and/or regulatable as a function of the detected measurement values.

11. Beam melting installation according to Claim 9 or 10, **characterized in that** it comprises at least one sensor (5) on the coating slide (3) or on the component connected thereto, by which perturbations and/or deflections of the coating slide, or of the component connected thereto, occurring during the travel can be metrologically detected.

## Revendications

1. Procédé de fabrication de composants (2) dans une installation de fusion par irradiation dans lequel au moins un composant (2) à fabriquer est réalisé par couches,
dans lequel pour réaliser chaque couche de composant, une couche de poudre est appliquée sur une plateforme de formation (1) et sur les couches déjà réalisées du composant au moyen d'un chariot de revêtement (3) qui est déplacé au-dessus de la plateforme de formation (1) avec un râteau fixé sur le chariot de revêtement (3),
ensuite, au moyen d'un faisceau dirigé, en particulier d'un faisceau laser ou d'un faisceau d'électrons, des pistes de fusion sont inscrites dans la couche de poudre, suite à quoi la poudre fond dans la piste de fusion et se lie aux couches du composant situées en dessous,
**caractérisé en ce que**
pendant le déplacement du chariot de revêtement (3) en vue d'appliquer une nouvelle couche de poudre, des perturbations du déplacement du chariot de revêtement (3) ou des composants qui y sont reliés sont saisies par une technique de mesure.

2. Procédé selon la revendication 1, **caractérisé en ce que** l'installation de fusion par irradiation est commandée et/ou régulée en fonction des valeurs de mesure saisies.

3. Procédé selon les revendications 1 ou 2, **caractérisé en ce que** les perturbations du déplacement sont saisies selon au moins l'une des variantes suivantes :
a. la saisie par technique de mesure d'oscillations du chariot de revêtement (3) ou des composants qui y sont reliés, en particulier par mesure d'accélérations, de l'amplitude et/ou de la fréquence, en particulier au moyen d'un capteur (5) prévu sur le chariot de revêtement (3) ou sur un composant qui y est relié,
b. la saisie par technique de mesure de forces, en particulier de forces agissant en opposition à la direction de déplacement sur le chariot de revêtement (3) ou sur un composant qui y est relié, en particulier au moyen d'un capteur prévu sur le chariot de revêtement (3) ou sur un composant qui y est relié,
c. la saisie par technique de mesure de la puissance d'entraînement ou des courants entraînant le moteur par lequel le chariot de déplacement (3) est déplacé,
d. la saisie par technique de mesure du son acoustique, au moyen d'un microphone servant de capteur, en particulier à l'intérieur de la chambre de fabrication et
e. la saisie par technique de mesure de déviations du chariot de revêtement (3) ou de composants qui y sont reliés, en particulier au moyen d'au moins un jauge de déformation utilisé comme capteur.

4. Procédé selon l'une des revendications précédentes, **caractérisé en ce que** les perturbations ou les valeurs de mesure ne sont saisies que pendant une partie de l'ensemble du parcours de déplacement du chariot de revêtement (3), tous les composants (2) à fabriquer étant disposés à l'intérieur de cette partie.

5. Procédé selon l'une des revendications précédentes, **caractérisé en ce que** le dépassement d'au moins une valeur limite conservée en mémoire pour les valeurs de mesure saisies est surveillé, différentes actions dépendant de la valeur limite étant déclenchées au cas où plusieurs valeurs limites sont initiées.

6. Procédé selon l'une des revendications précédentes, **caractérisé en ce qu'**en fonction des valeurs de mesure saisies et en particulier en cas de dépassement d'une valeur limite prédéterminée, la situation en cours de fabrication est saisie photographiquement ou vidéographiquement.

7. Procédé selon l'une des revendications précédentes, **caractérisé en ce qu'**en fonction des valeurs de mesure saisies et en particulier en cas de dépassement d'une valeur limite prédéterminée, le composant (2) à fabriquer disposé à ce moment en dessous du chariot de revêtement (3) et provenant d'un groupe de plusieurs composants (2) disposés sur la plateforme de formation est exclus de la poursuite des opérations de fabrication.

8. Procédé selon l'une des revendications précédentes, **caractérisé en ce qu'**en fonction des valeurs de mesure saisies et en particulier en cas de dépassement d'une valeur limite prédéterminée, un arrêt d'urgence de l'installation de fusion par irradiation est réalisé.

9. Installation de fusion par irradiation destinée à fabriquer par couches au moins un composant, et présentant
une chambre de traitement,
une plateforme de formation (1) ajustable en hauteur disposée dans la chambre de traitement, sur laquelle au moins un composant (2) peut être fabriqué,
et dans laquelle, pour la fabrication de chaque couche de composant, un chariot de revêtement (3) peut être déplacé par-dessus de la plateforme de formation (1) pour, à l'aide d'un râteau fixé sur le chariot de revêtement (3), appliquer une couche de poudre sur la plateforme de formation et des couches déjà réalisées du composant, et ensuite, au moyen d'un faisceau dirigé, en particulier un faisceau lasser ou un faisceau d'électrons, inscrire des pistes de fusion dans la couche de poudre, suite à quoi la poudre peut fondre dans la piste de fusion et se relier aux couches de composant situées en dessous,
**caractérisée en ce que**
l'installation est conçue pour, pendant le déplacement du chariot de revêtement (3) pour l'application d'une nouvelle couche de poudre, saisir par une technique de mesure des perturbations du déplacement du chariot de revêtement (3) ou de composants qui y sont reliés.

10. Installation de fusion par irradiation selon la revendication 9, **caractérisée en ce que** l'installation de fusion par irradiation peut être commandée et/ou régulée en fonction des valeurs de mesure saisies.

11. Installation de fusion par irradiation selon les revendications 9 ou 10, **caractérisée en ce qu'**elle présente au moins un détecteur (5) sur le chariot de revêtement (3) ou sur un composant qui y est relié, par lequel des oscillations et/ou des déviations du chariot de revêtement ou du composant qui y est relié, survenant pendant le déplacement, peuvent être saisies par technique de mesure.
